# Europäisches Patentamt
## European Patent Office
## Office européen des brevets

(19)

(11) Veröffentlichungsnummer: **0 059 227**
**B1**

(12)

# EUROPÄISCHE PATENTSCHRIFT

(45) Veröffentlichungstag der Patentschrift:
25.04.84

(21) Anmeldenummer: 81101400.0

(22) Anmeldetag: 26.02.81

(51) Int. Cl.³: **B 03 D 1/00**, B 03 D 1/24,
G 03 C 5/38, C 22 B 3/00,
C 22 B 11/04, C 02 F 1/52,
C 01 G 5/00

(54) Flotationsverfahren zur kontinuierlichen Wiedergewinnung von Silber oder Silberverbindungen aus Lösungen oder Dispersionen.

(43) Veröffentlichungstag der Anmeldung:
08.09.82 Patentblatt 82/36

(45) Bekanntmachung des Hinweises auf die Patenterteilung:
25.04.84 Patentblatt 84/17

(84) Benannte Vertragsstaaten:
BE CH DE FR GB IT LI

(56) Entgegenhaltungen:
GB - A - 225 635
GB - A - 773 716
GB - A - 860 542
US - A - 282 819

PATENT ABSTRACTS OF JAPAN, Band 5, Nr. 58, 21. April 1981, Seite (C-51) (730)
PATENT ABSTRACTS OF JAPAN, Band 3, Nr. 19, 17. February 1979, Seite 59C37
CHEMICAL ABSTRACTS, Band 85, Nr. 14, 5. Juni 1976, Seite 196, Nr. 97356m Columbus, Ohio, U.S.A.

(73) Patentinhaber: **AGFA-GEVAERT Aktiengesellschaft, D-5090 Leverkusen 1 (DE)**

(72) Erfinder: **Zlokarnik, Marko, Prof. Dr., Wolfskaul 5, D-5000 Köln 80 (DE)**
Erfinder: **Schindler, Georg, Dipl.-Ing., Gustav-Freytag-Strasse 9, D-5090 Leverkusen 1 (DE)**
Erfinder: **Koepke, Günther, Dr., Zum Hahnenberg 41, D-5068 Odenthal (DE)**
Erfinder: **Stracke, Werner, Dr., Am Vogelsfeldchen 13, D-5090 Leverkusen 1 (DE)**

## Flotationsverfahren zur kontinuierlichen Wiedergewinnung von Silber oder Silberverbindungen aus Lösungen oder Dispersionen

Die Erfindung betrifft ein Flotationsverfahren zur kontinuierlichen Wiedergewinnung von Silber oder Silberverbindungen aus Dispersionen, insbesondere von Silber und Silberhalogeniden.

Bei der Herstellung und der Verarbeitung fotografischer Materialien entstehen Abwässer, die Silber oder Silberverbindungen enthalten. Aus diesen oder auch anderen silberhaltigen Abwässern muß das Silber aus ökonomischen Gründen und wegen seiner toxischen Wirkung so vollständig wie möglich entfernt und wiedergewonnen werden. Wegen der antibakteriösen Wirkung silberhaltiger Abwässer ist eine Einleitung in die Kanalisation nicht statthaft. (Der behördlich vorgeschriebene Grenzwert beträgt zur Zeit 2 mgl Silber im Abwasser).

Es sind eine Vielzahl von Verfahren zur Entsilberung von Abwässern, die Silber, Silberhalogenide, organische und anorganische Substanzen, sowie Gelatine im wäßrigen Gemisch beinhalten, bekannt.

So kann beispielsweise aus Abwässern, die bei der Herstellung und der Verarbeitung fotografischer Materialien entstehen, das Silber dadurch zurückgewonnen werden, daß die Gelatine chemisch, thermisch oder biologisch abgebaut wird. Die silberhaltigen Teilchen werden durch Filtration, Ultrafiltration, Sedimentation oder Zentrifugieren separiert.

Ohne oder mit einem Abbau der Gelatine arbeiten Verfahren, bei denen den Abwässern Flockmittel organischer oder anorganischer Art zugegeben werden, die Flocken bilden, in denen die Silber- oder Silberhalogenidteilchen eingeschlossen sind. Die Flocken werden durch Filtration, Ultrafiltration, Sedimentation oder Zentrifugieren isoliert und aus der Masse das Silber zurückgewonnen. Soll die Gelatine abgebaut werden, so geschieht dies vor dem Flocken auf chemische, thermische oder biologische Weise.

Bekannt ist auch ein physikalisches Verfahren, bei welchem die Silber- oder Silberhalogenidteilchen von den übrigen Stoffen im Abwasser durch Zentrifugieren oder durch eine Reversosmose getrennt oder aufkonzentriert werden.

Für kleinere Abwassermengen werden elektrolytische Verfahren angewendet, wobei das Abwasser zuvor mit Silber angereichert wird. Auch sind Verfahren bekannt, bei welchen zur Entfernung von Silber aus silberkomplexhaltigen Lösungen die Lösung mit einem stark basischen Ionenaustauscherharz in Berührung gebracht wird, das Ionenaustauscherharz mit einer Salzlösung desorbiert und das Silber dann elektrolytisch aus der Lösung gewonnen wird.

Aus der GB-PS 860 542 ist ein Verfahren zur Abscheidung von Silberhalogeniden aus wäßrigen Dispersionen, insbesondere aus Abwässern, die bei der Herstellung und dem Gießen fotografischer Silberhalogenid-Emulsionen entstehen, bekannt. Bei diesem Verfahren wird das Abwasser unter Druck mit Luft gemischt und ein aktiviertes Natriumsilikat zugesetzt. Kurz vor oder nach der Entspannung des Abwassers durch Reduzierung des Druckes wird Natronlauge zugeführt, so daß siliziumhaltige Flocken entstehen, die von den Luftblasen an die Oberfläche getragen werden. Die Flocken umschließen die Silberhalogenide, welche mit den Flocken an der Oberfläche abgenommen werden.

Dieses Verfahren hat den erheblichen Nachteil, daß dem Abwasser zur Aufbereitung eine große Menge Chemikalien zugeführt werden muß, wobei die Abwassermenge vergrößert wird, das Abwasser zusätzlich mit Chemikalien belastet wird und das ausgeflockte Natriumsilikat von dem mit ausgeflockten Silber getrennt werden muß.

Eine weitere Abwasserentsilberung durch Elektroflotation ist aus der Zeitschrift Chemische Industrie (29, März 1979, Seite 151) bekannt. Das Abwasser wird mit Eisenchlorid und Natronlauge sowie einem Flockhilfsmittel versetzt. Es bilden sich Eisenhydroxidflocken, die die Silberhalogenide umschließen. Die Flocken steigen durch Gasbläschen, die durch Wasserelektrolyse erzeugt werden, an die Oberfläche des Beckens und werden abgesaugt. Der Eisenhydroxidschlamm wird mit Säure versetzt und 8 bis 9 Stunden auf 90° C erhitzt, wobei der silberhaltige Schlamm ausfällt.

Das angegebene Verfahren ist sehr aufwendig, da auch hier dem Abwasser Chemikalien (Eisenchlorid) und Flockhilfsmittel und Natronlauge zugeführt werden müssen. Der entstehende Eisenhydroxidschlamm wird mit erheblichem Energieaufwand zur Ausfällung des silberhaltigen Schlammes erhitzt. Die Erzeugung von Gasbläschen durch Wasserelektrolyse ist wegen des erheblichen Energieverbrauches sehr aufwendig.

Der Erfindung liegt daher die Aufgabe zugrunde, ein Verfahren der eingangs genannten Art zu schaffen, mit dem es auf einfache und kostensparende Weise möglich ist, aus wäßrigen Gemischen von verschiedenen organischen und anorganischen Substanzen Silber- und Silberverbindungen möglichst weitgehend zurückzugewinnen. Der Restgehalt des Abwassers soll vorzugsweise weniger als 1 mg Silber pro Liter betragen.

Die Aufgabe wird erfindungsgemäß dadurch gelöst, daß in Gegenwart von Proteinen fein verteilte inerte Gasblasen in Dispersionen von Silber oder Silberverbindungen eingeblasen werden, wobei der pH-Wert des Mediums etwa bei dem isoelektrischen Punkt des Proteins gehalten wird.

Es war überraschend und nicht zu erwarten, daß in Gegenwart von Proteinen und bei einem pH-Wert, der nahe dem isoelektrischen Punkt des Proteins liegt, durch Einblasen von fein verteilten inerten Gasblasen in die Lösung oder Dispersion ein Flotat erzeugt werden kann, welches bis auf geringe Spuren in dem Abwasser alle heterodispersverteilten Silber- und Silberverbindungen enthält. An das zugefügte Protein lagern sich die Partikel von Silber- oder Silberverbindungen, insbesondere Silberhalogenide, und Luftbläschen an und steigen zur Oberfläche auf, wo sie als Schaum abgeführt werden.

In einem bevorzugten Verfahren wird den Abwässern, die in heterodisperser Verteilung Silber- und Silberverbindungen sowie anderen Chemikalien enthalten, als Protein Gelatine zugeführt.

Wird bei der Verwendung von Gelatine der pH-Wert auf einen Wert nahe dem isoelektrischen Punkt der Gelatine eingestellt, so entstehen Gelatineflocken. Der pH-Wert liegt für die fotografisch verwendeten Gelatinen je nach Herstellungsart bei pH-Werten zwischen 3 und 9, bei dem meist verwendeten alkalisch geäscherten bei pH-Werten zwischen 3 und 5, meistens bei einem Wert von etwa 4.

Beispielsweise stellen fotografische Abwässer häufig ein wäßriges Gemisch dar, welches unter anderem 30 bis 1200 mg Silber pro Liter 100 bis 1200 ppm Gelatine enthält, und einen pH-Wert um 7 aufweist. Zur Einstellung des wäßrigen Gemisches auf den isoelektrischen Punkt der Gelatine von pH 4 wird eine Säure dem Gemisch zugegeben, z. B. anorganische Säuren wie Schwefel-, oder Salzsäure.

In einer sehr vorteilhaften Durchführung des Verfahrens wird der Lösung oder Dispersion ein Tensid, insbesondere ein kationisches Tensid, je nach Beschaffenheit des Wassers zum Beispiel in einer Menge von 5 bis 30 ppm zugegeben. Durch das Tensid wird die Flotationszeit stark reduziert oder es kann mit der gleichen Flotationszelle eine größere Menge Abwasser entsilbert werden.

Als kationische Tenside sind kationische Polyelektrolyte bevorzugt, die in einer Menge von etwa 20 ppm dem Abwasser zugegeben werden.

Das Verfahren läßt sich in überraschend einfacher Weise bei Temperaturen zwischen 15° und 50°C durchführen. Optimale Ergebnisse zeigen sich bei einer Temperatur von 20°C und kleiner, also bei normaler Raumtemperatur. Fallen die Abwasser mit höheren Temperaturen, z. B. mit 40°C an, so kann über Wärmeaustauscher und Wärmepumpen Energie gewonnen und gleichzeitig das Flotationsverfahren optimiert werden.

Für die Durchführung des Flotationsverfahrens ist eine feine Verteilung der Gasblasen in der Flotationszelle von Vorteil. Hierzu sind in der Industrie eine Vielzahl von Vorrichtungen bekannt. Da als Gas normale Luft verwendet werden kann, ist es vorteilhaft, daß zur feinen und intensiven Gasverteilung in dem Medium beispielsweise eine Trichterdüse verwendet wird, die die Lösung oder Dispersion in eine Flotationszelle verteilt und das Gas selbst ansaugt.

Derartige Flotationszellen mit Trichterdüsen sind aus der DE-A-3 008 476 bekannt und zeigen außer einer guten Verteilung des Abwassers und der Luftbläschen in der Flotationszelle den Vorteil, daß die Luft durch die Abwasserdüse ohne zusätzlichen Energieaufwand aus der Raumluft angesaugt und durch den Düsenstrahl in kleinste Luftbläschen zerlegt wird, die in der Flotationszelle aufsteigen und an der Oberfläche mit dem Flotat einen Schaum bilden. Die Schaummenge beträgt mit der Trichterdüse maximal 2%, in der Regel aber weniger als 1% der behandelten Abwassermenge. Die Biowasser, die in den Abwasserkanal abgegeben werden, betragen 98 bis 99% der eingesetzten Abwassermenge und enthalten weniger als 1 mg Silber pro Liter Abwasser und bei optimalen Bedingungen weniger als 0,1 mg Silber pro Liter.

Um ein möglichst konzentriertes Flotat zu erhalten wird ein Verfahren angewendet, welches sich dadurch auszeichnet, daß zur feinen und intensiven Gasverteilung in dem Medium eine Gasverteilungseinrichtung verwendet wird, die gesondert mit Druck zugeführtes Gas in der Flotationszelle gleichmäßig verteilt.

Derartige Gasverteilungseinrichtungen, wie Gasverteilungssiebe, Fritten, luftdurchlässige poröse Stoffe, wie Sintermetalle, gesinterte Kunststoffe und andere haben den Vorteil, daß sehr kleine Luftbläschen auf einer großen Fläche am Boden einer Flotationszelle erzeugt werden können. Allerdings ist hierzu Preßluft erforderlich. Die Luftverteilung wird aber sehr fein bewerkstelligt, was beim Flotieren der kleinen Partikel, die in der Größenordnung von 0,1 bis 3 µm liegen, eine Intensivierung des Flotationsvorganges bewirkt.

Eine Hintereinanderschaltung mehrerer Flotationszellen zu einer Kaskade, wodurch die Flotation des Abwassers in mehreren Schritten erfolgt, hat sich als vorteilhaft gezeigt, da bei geringerem Volumen der Flotationszellen die gleiche Abwassermenge verarbeitet werden kann. Eine Steigerung der Stufenzahl von eins auf drei oder von drei auf fünf reduziert das Gesamtvolumen einer Anlage jeweils auf die Hälfte und ist wirtschaftlich vorteilhaft. Eine weitere Erhöhung der Stufenzahl verkleinert das Volumen nicht mehr wesentlich, führt aber zu einer wesentlichen Reduzierung des Flüssigkeitskreislaufes je Stufe und kann somit zur Senkung der Investitions- und Betriebskosten führen. So ergibt eine Erhöhung der Stufenzahl von fünf auf acht Stufen eine Verminderung der Pumpenleistung um 30%.

Das Verfahren kann in vorteilhafter Weise auch bei Abwässern verwendet werden, die bei der Herstellung und der Verarbeitung fotografische Materialien, wie Film und Fotopapiere, anfallen, da diese bereits Gelatine enthalten. Der Dispersion muß hierbei zur Wiedergewinnung von Silber und Silberhalogeniden kein Protein bzw. keine Gelatineemulsion zugeführt werden.

Sind die Abwässer auf den pH-Wert eingestellt, der dem isoelektrischen Punkt der Gelatine entspricht, so reicht bereits das Einblasen von fein verteilter Luft unter Umwälzung des Wassers, um die Gelatine und die Silber- oder Silberhalogenidpartikel als Schaum an der Oberfläche abzuscheiden. Beschleunigt wird die Abscheidung durch Zufügen eines kationisch wirksamen Polyelektrolytes.

Für die Durchführung des erfindungsgemäßen Verfahrens geeignete Vorrichtungen werden nachstehend anhand von Zeichnungen näher erläutert. Es zeigt

Fig. 1 eine schematische Darstellung einer Flotationszelle zur Durchführung des Verfahrens,

Fig. 2 eine Flotationszelle mit einer Gasverteilungseinrichtung,

Fig. 3 eine Einrichtung zur Durchführung des Verfahrens mit drei Flotationsstufen nach Fig. 1,

Fig. 4 die Abhängigkeit der Flotation von dem isoelektrischen Punkt am Beispiel fotografischer Gelatine,

Fig. 5 die Temperaturabhängigkeit des Flotationsverfahrens.

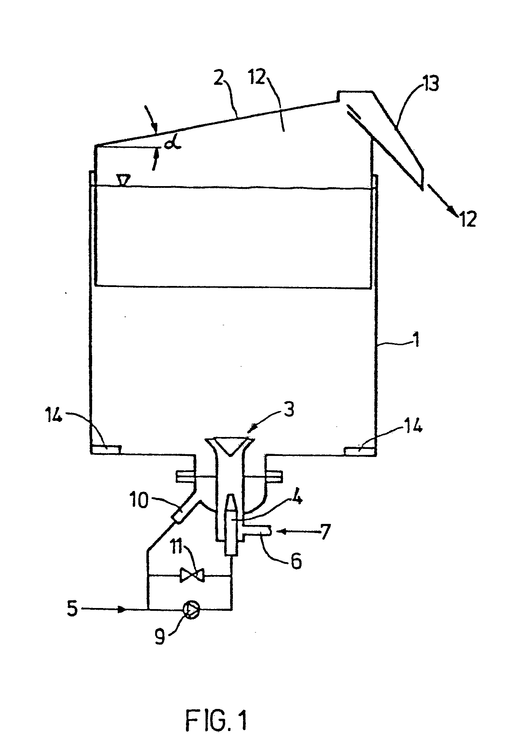

In Fig. 1 ist eine einfache und zweckmäßige Flotationszelle dargestellt. Sie besteht aus einem vorzugsweise rechteckigen oder auch runden Behälter 1 in dem ein festes oder auf- und abbewegbares Dachteil 2 eingelassen ist. Der Boden des Behälters 1 besitzt einen Flanschanschluß mit dem eine Trichterdüse 3 angeflanscht ist. Die Trichterdüse 3 besitzt eine Düse 4 durch die das Abwasser 5 in den Behälter 1 unter Druck mit einer Pumpe 9 eingepumpt wird, so daß der Düsenstrahl durch den Stutzen 6 Luft 7 ansaugt und mit dem Abwasser 5 in dem Behälter 1 fein verteilt. Mit einem Beipaß 10 und einem Ventil 11 kann die einzubringende und umzuwälzende Abwassermenge 5 geregelt werden.

Das aus der Trichterdüse 3 austretende Abwasser mit den fein verteilten Luftblasen 7 verteilt sich gleichmäßig in dem Behälter, wobei sich an die Luftbläschen Gelatine mit den an- oder eingelagerten Silber- oder Silberhalogenidteilchen infolge der Affinität ansetzen und durch den Auftrieb von Luft in Wasser an die Oberfläche gelangen, und als Schaum 12 aus dem Abwasser austreten. Durch die Neigung des Dachteiles 2 unter einem Winkel $\alpha$ von 5 – 20°, vorzugsweise 10° und der Einstellbarkeit des Dachteiles 2 in seiner Höhe zur Abwasseroberfläche wird der Schaum 12 einerseits komprimiert und gleichzeitig zu einem Auslaß 13 gedrückt und abgeleitet. Die Flotationszelle kann durch Verbindungskanäle 14 mit weiteren Flotationszellen verbunden werden.

In einer vorteilhaften Ausführungsform kann die Trichterdüse 3 auch so angeordnet sein, daß das Abwasser von oben nach unten in den Behälter 1 strömt und der Boden des Behälters 1 ebenfalls bespült wird (nicht dargestellt).

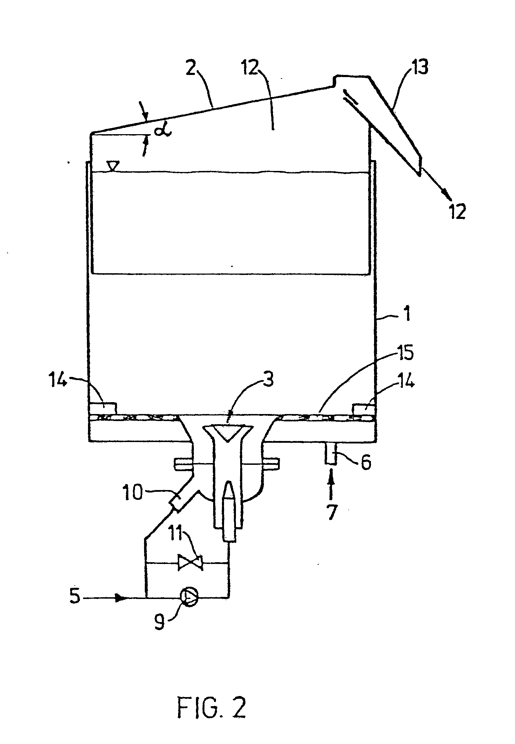

In Fig. 2 ist eine Flotationszelle dargestellt, bei der die Luft 7 als Preßluft durch einen Stutzen 6 in den unteren Raum des Behälters 1 gepreßt wird und, durch ein für die Luftverteilung geeignetes Material 15 gleichmäßig über die Bodenfläche des Behälters 1 verteilt, als Luftbläschen in das Abwasser 5 geblasen wird. Als Luftverteiler 15 können Siebe, Fritten aus Glas, Kunststoff oder poröse Materialien, wie Sinterplatten aus Edelstahl, Kunststoff oder dergleichen verwendet werden. Die Porengröße oder die Sieblochgröße richtet sich nach der Art des zu verarbeitenden Abwassers, nach der Behälterhöhe, nach der Durchsatzmenge an Abwasser und der Zahl der Flotationszellen. Natürlich ist auch eine Kombination der Luftinjektion nach Fig. 1 und 2 mit der Trichterdüse 3 und dem Einblasen von Druckluft 7 und der Luftverteilung mit einem Luftverteiler 15 möglich und von Vorteil. Die Wirkungsweise der Flotationszelle entspricht der wie in Fig. 1.

Die Entnahme des Schaumes von der Oberfläche des Abwassers in dem Behälter 1 kann auch durch Absaugen oder durch mechanische Schaumzerstörer, z. B. nach der DE-A-3 088 589 erfolgen, wobei der Schaum in einen rotierenden Kopf hineingesaugt und durch Zentrifugalkraft komprimiert und ausgestoßen wird (nicht dargestellt).

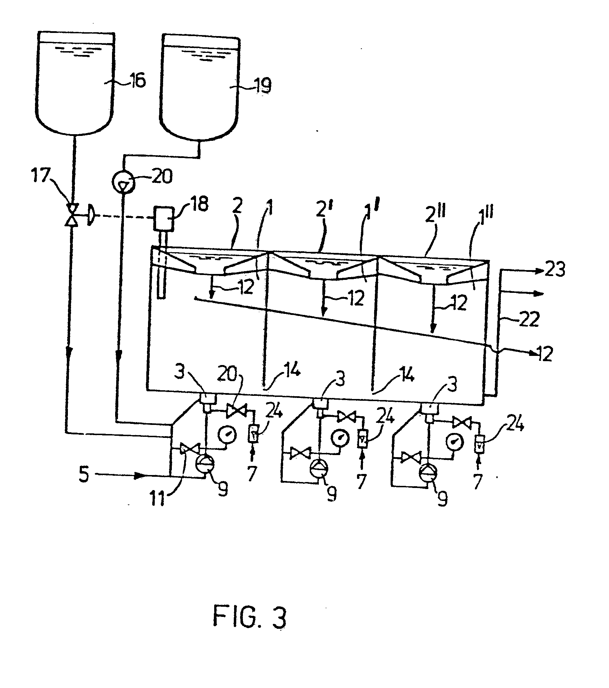

Fig. 3 zeigt eine Einrichtung zur Durchführung des erfindungsgemäßen Verfahrens mit 3 Flotationszellen 1, 1', 1''.

Die zugeleiteten Abwässer 5, z. B. von der Herstellung und der Verarbeitung von fotografischen Materialien, enthalten außer anorganischen und organischen Chemikalien sowohl Gelatine als auch Silber und Silberhalogenide, wie Bromsilber, Jodsilber, Chlorsilber heterodispers verteilt oder die unterschiedlichsten Mischungen davon. Die Abwässer 5 haben einen pH-Wert von 7 bis 8 und müssen daher sauer gestellt werden, um den isoelektrischen Punkt zu erreichen, der bei fotografischen Gelatinen im allgemeinen bei einem pH-Wert von etwa 4 liegt. Hierzu wird dem Abwasser 5 vor dem Einlauf in die Pumpe 9 aus einem Säurebehälter 16 über ein Ventil 17 Säure, z. B. Schwefelsäure, zudosiert. Das Ventil 17 wird über ein pH-Wert-Meßgerät 18, welches an einer geeigneten Stelle in der ersten Flotationszelle 1 eingebaut ist, gesteuert. Aus einem zweiten Behälter 19 wird über eine Dosierpumpe 20 ein Tensid, z. B. ein kationisch wirksames Polyelektrolyt, in einer Menge von etwa 20 ppm dem Abwasser zugesetzt. Das Gemisch wird von der Pumpe 9 unter Druck durch die Trichterdüse 3 unter Ansaugen von Luft 7 in die Flotationszelle eingespritzt. Die Luftmenge kann über ein Ventil 20 eingestellt oder mit Reglern 24 geregelt werden. Die Menge des Gemisches wird durch das Bypassventil 11 eingestellt oder geregelt, wodurch ein für die Optimierung der Flotation erforderliches Wasser-Luft-Gemisch wählbar ist.

Durch die aufsteigenden Luftblasen wird das Flotat im Dachteil 2 ausgeschieden und verläßt über eine Sammelleitung den Prozeß. Der Schaum des Flotates wird durch die dachförmige Konstruktion komprimiert, wobei die großen Blasen zerplatzen und der Schaum Flüssigkeit verliert, so daß er weniger als 1% der verarbeitenden Abwassermenge ausmacht.

Das bereits im ersten Behälter teilweise entsilberte Abwasser gelangt nach einem oder mehreren Kreisläufen in dem Behälter 1 durch den Verbindungskanal 14 in die zweite Flotationszelle 1' und nach einer weiteren Behandlung in die dritte Flotationszelle 1'' zur letzten Behandlung. Wie dargestellt, wird in allen drei Stufen der Kaskade Luft 7 zugeführt und das Abwasser mit Pumpen 9 umgewälzt. Das entsilberte Abwasser 23 verläßt durch ein Rohr 22 auf dem Flüssigkeitsniveau der Kaskade das Flotationsverfahren und wird einem Biowasserkanal zugeleitet. Da alle Behälter 1, 1', 1'' kommunizierend miteinander verbunden sind, ist das Niveau der Abwasseroberfläche durch die Höhe der Ausflußöffnung des Rohres 22 wählbar.

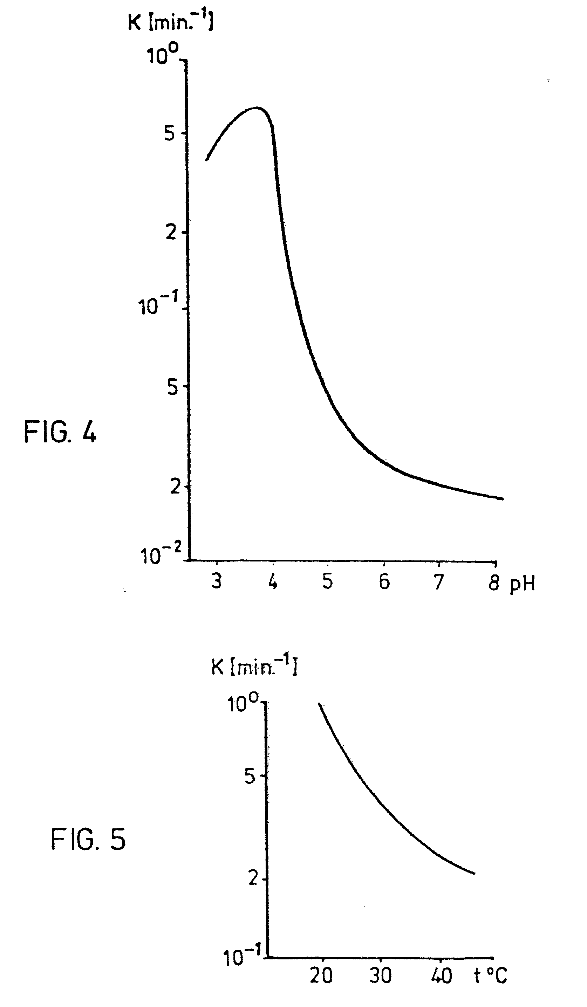

Fig. 4 zeigt die Abhängigkeit der Flotationsgeschwindigkeit von dem isoelektrischen Punkt am Beispiel einer Gelatine. Über den pH-Wert ist die Größe der Flotationsgeschwindigkeitskonstanten K [min$^{-1}$] in logarithmischem Maßstab aufgetragen. Die Kurve zeigt, daß die Flotation am isoelektrischen Punkt der Gelatine in diesem Falle bei einem pH-Wert von etwa 4, am schnellsten verläuft und für das beschriebene Flotationsverfahren ein pH-Bereich von 3 bis 5 brauchbar ist, wobei der pH-Wert bei niedrigeren Temperaturen etwas höher liegt als bei höheren Temperaturen.

Fig. 5 zeigt die Abhängigkeit der Flotationsgeschwindigkeit von der Temperatur t des Abwassers. Über der Temperatur t ist in logarithmischem Maßstab die Größe der Flotationsgeschwindigkeitskonstanten K [min$^{-1}$] aufgetragen. Vorteilhaft ist demnach eine Temperatur bei 20°C oder geringer. Da der Bereich unter 20°C eine Kühlung der Abwässer erfordert, ist dieser Bereich wirtschaftlich weniger interessant. Bei anfallenden Abwässern von 40°C ist jedoch eine Kühlung auf 20°C wirtschaftlich, da aus dem warmen Wasser mittels Wärmeaustauschern zusätzlich Energie gewonnen werden kann. Die optimale Temperatur t liegt demnach bei der Raumtemperatur von 16° bis 20°C. Bei 20°C zeigt sich die maximale Flotationsgeschwindigkeit bei einem pH-Wert von 4.

Beispiel

Eine Versuchsflotationsanlage zur kontinuierlichen Wiedergewinnung von Silber aus Abwässern hatte folgende Daten:

— Kaskade mit 3 Behältern (wie in Fig. 3 schematisch dargestellt)
— Kaskadenvolumen 6,3 m³
— Umpumpvolumen 75 m³/h
— Motorleistung (Pumpen) 3,75 kW
— entsilberte Abwassermenge 9,5 m³/h
— Verbrauch Luft 11 m³/h

— Verbrauch Schwefelsäure (48%) 1,5 l/h
— Verbrauch Polyelektrolyt 0,2 l/h
  (Praestaminol® RO, Fa. Stockhausen)
— Silber im entsilberten Abwasser 1 mg Ag/l

Die Arbeitsweise der Anlage war folgende:

Das silberhaltige Abwasser (5) wurde aus einem Sammelbehälter mit einer Pumpe (9) entnommen und in die Kaskade (1, 1', 1'') gepumpt. Die Füllhöhe der Kaskade (1, 1', 1'') war über ein höhenverstellbares Auslaufrohr (22) am Ausgang der Kaskade eingestellt, so daß ein Überlauf von Abwasser über die Schaumaustragtrichter (13, Fig. 13) nicht stattfinden konnte. Bei einem Überlauf von Abwasser am Ausgang der Kaskade mit einem Silbergehalt größer als 1 mg/l wurde die Pumpe (9) ausgeschaltet. Das Dachteil 2 der ersten Kaskade (1) war entsprechend dem Schaumanfall eingestellt, so daß der Austrag von möglichst trockenem Schaum (12) erfolgte. Da in der ersten Kammer (1) der Kaskade etwa 60 bis 90% des Schaums (12) ausgetragen wurden, war diese Kammer mit einem Schaumzerstörer versehen. Nach der Füllung der Kaskade mit silberhaltigem Abwasser (5) wurden die Pumpen (9) eingeschaltet und das Abwasser über Trichterdüsen (3) umgepumpt. Durch die Injektorwirkung der Trichterdüsen (3) wurden 11 m³/h Raumluft eingesaugt und in dem Abwasser der jeweiligen Kaskadenkammer (1, 1', 1'') feinstverteilt. Beim Einpumpen des Abwassers (5) in die Kaskade wurde bei halber Füllung der Kaskade die Dosierung der Schwefelsäure aus dem Behälter (16) eingeschaltet und das Abwasser 5 über einen voreingestellten Sollwert auf einen pH-Wert 4 abgesenkt und die Dosierung des kationisch wirksamen Polyelektrolyten aus dem Behälter (19) zugeschaltet. Zur guten Verteilung der Säure und des Polyelektrolyten erfolgte die Zudosierung saugseitig in der Bypassleitung vor der ersten Umwälzpumpe (9) (siehe Fig. 3). Nach einer Anlaufzeit von ca. 30 Minuten, nach Klärung des Abwassers in der Flotationsanlage wurde der Zulauf aus dem Abwasservorratsbehälter zugeschaltet und die kontinuierliche Flotation eingeleitet. Dieser Zulauf wurde in Abhängigkeit des Silberwertes am Auslauf geregelt und bei einem Silberdurchbruch (> 1 mg Ag/l) der Zulauf automatisch unterbrochen. Bei der kontinuierlichen Fahrweise wurde der das Silber und die Gelatine enthaltende Schaum (12) auf ein Volumen konzentriert, das weniger als 2% der eingesetzten Abwassermenge betrug. Der Schaum (12) wurde in einer Kochbütte weiter konzentriert und zur Feinsilberrückgewinnung weitergeleitet. Statt der Kochbütte hätte der Schaum (12) auch mit einer Kammerfilterpresse zu einem Schlammkuchen gepreßt werden können. Das entsilberte Abwasser (Silbergehalt kleiner 1 mg/l) wurde in den Abwasserkanal abgeleitet. Bei der kontinuierlichen Flotation wurde der Silbergehalt in den Kammern (1, 1', 1'') der Kaskade ungefähr wie folgt abgebaut

1. Kammer (1) 80%,
2. Kammer (1') 19%,
3. Kammer (1'') 1%.

## Patentansprüche

1. Flotationsverfahren zur kontinuierlichen Wiedergewinnung von Silber oder Silberverbindungen aus Dispersionen, insbesondere von Silber- und Silberhalogeniden, dadurch gekennzeichnet, daß in Gegenwart von Proteinen fein verteilte inerte Gasblasen in die Dispersionen von Silber oder Silberverbindungen eingeblasen werden, wobei der pH-Wert des Mediums etwa bei dem isoelektrischen Punkt des Proteins gehalten wird.

2. Verfahren nach Anspruch 1, dadurch gekennzeichnet, daß zur Wiedergewinnung von Silber und Silberhalogeniden aus Dispersionen, die wenig oder keine Proteine enthalten, Proteine oder Proteinlösungen zugefügt und diese mit dem Medium gemischt werden.

3. Verfahren nach Anspruch 1, dadurch gekennzeichnet, daß die Proteine Gelatinen sind.

4. Verfahren nach Anspruch 3, dadurch gekennzeichnet, daß der pH-Wert des Mediums auf 3 bis 5 eingestellt wird.

5. Verfahren nach Anspruch 1 bis 4, dadurch gekennzeichnet, daß der Lösung oder Dispersion ein Tensid in einer Menge von 5 bis 30 ppm zugesetzt wird.

6. Verfahren nach Anspruch 5, dadurch gekennzeichnet, daß das Tensid ein kationischer Polyelektrolyt ist.

7. Verfahren nach Anspruch 1, dadurch gekennzeichnet, daß die Dispersion bei einer Temperatur von 15° bis 50° C, flotiert wird.

8. Verfahren nach Anspruch 1, dadurch gekennzeichnet, daß zur feinen und intensiven Gasverteilung in dem Medium eine Trichterdüse verwendet wird, die die Lösung oder Dispersion in eine Flotationszelle verteilt und das Gas selbst ansaugt.

9. Verfahren nach Anspruch 1, dadurch gekennzeichnet, daß zur feinen und intensiven Gasverteilung in dem Medium eine Gasverteilungseinrichtung verwendet wird, die gesondert zugeführtes Gas in der Flotationszelle gleichmäßig verteilt.

10. Verfahren nach Anspruch 1, dadurch gekennzeichnet, daß die Flotation in mehreren Schritten in hintereinandergeschalteten Flotationszellen erfolgt.

## Claims

1. Flotation process for the continuous recovery of silver or silver compounds from dispersions, in particular of silver and silver halides, characterised in that in the presence of proteins finely divided inert gas bubbles are blown into the dispersions of silver or silver compounds, the pH value of the medium being kept approximately at the isoelectric point of the protein.

2. Process according to Claim 1, characterised in that for the recovery of silver and silver halides from dispersions which contain a small amount of or no proteins proteins or protein solutions are added and mixed with the medium.

3. Process according to Claim 1, characterised in that the proteins are gelatins.

4. Process according to Claim 3, characterised in that the pH value of the medium is adjusted to 3 to 5.

5. Process according to Claim 1 to 4, characterised in that an amount of 5 to 30 ppm of a surfactant is added to the solution or dispersion.

6. Process according to Claim 5, characterised in that the surfactant is a cationic polyelectrolyte.

7. Process according to Claim 1, characterised in that the dispersion is floated at a temperature of 15° to 50° C.

8. Process according to Claim 1, characterised in that for the fine and intensive distribution of gas in the medium a funnel-shaped nozzle is used which distributes the solution or dispersion into a flotation cell and itself sucks in the gas.

9. Process according to Claim 1, characterised in that for the fine and intensive distribution of the gas in the medium a gas distribution device is used which uniformly distributes separately supplied gas in the flotation cell.

10. Process according to Claim 1, characterised in that the flotation takes place in several stages in flotation cells connected in series.

## Revendications

1. Procédé de flottation pour la récupération continue d'argent ou de composés d'argent de dispersions, en particulier d'argent et d'halogénures d'argent, caractérisé en ce que l'on injecte des bulles de gaz inerte finement dispersées en présence de protéines dans les dispersions d'argent ou de composés d'argent, le pH du milieu étant maintenu à peu près au point isoélectrique de la protéine.

2. Procédé selon la revendication 1, caractérisé en ce que, pour la récupération d'argent et d'halogénures d'argent à partir de dispersions qui contiennent peu ou pas de protéines, on ajoute des protéines ou des solutions de protéines et on les mélange avec le milieu.

3. Procédé selon la revendication 1, caractérisé en ce que les protéines sont des gélatines.

4. Procédé selon la revendication 3, caractérisé en ce que le pH du milieu est réglé à 3 – 5.

5. Procédé selon les revendications 1 à 4, caractérisé en ce que l'on ajoute à la solution ou dispersion un tensioactif en quantité de 5 à 30 ppm.

6. Procédé selon la revendication 5, caractérisé en ce que le tensioactif est un polyélectrolyte cationique.

7. Procédé selon la revendication 1, caractérisé en ce que la dispersion est mise en flottation à une température de 15 à 50°C.

8. Procédé selon la revendication 1, caractérisé en ce que l'on utilise pour la dispersion fine et intense du gaz dans le milieu une buse-entonnoir, qui disperse la solution ou dispersion dans une cellule de flottation et aspire le gaz lui-même.

9. Procédé selon la revendication 1, caractérisé en ce que l'on utilise pour la dispersion fine et intense du gaz dans le milieu un dispositif de dispersion de gaz qui disperse uniformément dans la cellule de flottation du gaz envoyé séparément.

10. Procédé selon la revendication 1, caractérisé en ce que la flottation s'effectue en plusieurs étapes dans les cellulose de flottation branchées en série l'une à la suite de l'autre.

FIG. 1

FIG. 2

FIG. 3

FIG. 4

FIG. 5